# EUROPEAN PATENT APPLICATION

(11) **EP 3 985 638 A1**
(43) Date of publication of application: **20.04.2022**
(21) Application number: 20823216.5
(22) Date of filing: 10.03.2020
(51) Int. Cl.: G08G 1/09, G08G 1/0968, G08G 1/13, G01C 21/36, B60L 3/00, B60L 50/60, B60L 58/12

(54) **ROUTE PLANNING DEVICE, ROUTE PLANNING METHOD, AND ROUTE PLANNING SYSTEM**

(30) Priority: 12.06.2019 JP 2019109255
(71) Applicant: Hitachi, Ltd., Tokyo 100-8280 (JP)
(72) Inventor: SHIMADA Atsushi, Tokyo 100-8280 (JP); MIYAZAKI Taizou, Tokyo 100-8280 (JP)
(74) Representative: MERH-IP Matias Erny Reichl Hoffmann Patentanwälte PartG mbB
(86) International application number: PCT/JP2020/010217
(87) International publication number: WO 2020/250512

(57) **Abstract**

A management server according to the present invention comprises: a position confirmation unit which confirms a via point of a vehicle and the position of the vehicle; an objective function determination unit which determines an objective function; a vehicle assessment unit which assesses for each of a plurality of vehicles whether the vehicle is a moving vehicle that is currently moving or is scheduled to move or a stopped vehicle that is currently stopped, on the basis of information collected from the plurality of vehicles; and a computation allocation determination unit which determines that a computational process for planning a route for a moving vehicle moving by consuming energy supplied to a drive source from an energy storage unit is to be allocated to a stopped vehicle able to compute the objective function, and which, via a server-side communication unit, directs a controller of the stopped vehicle to perform the computation.

## Description

### Technical Field

The present invention relates to a route planning device, a route planning method; and a route planning system.

### Background Art

In the future, it is predicted that a delivery company or an automobile sharing company will possess a plurality of high functional automobiles which are compatible with electrification of automobiles and automatic driving. Automobiles which a company possesses are engine mounted automobiles which use a fuel. A cruising distance of an engine mounted automobile is long and hence, the fluctuation of a fuel cost per day is small. Accordingly, a moving route search is computed aiming at the arrival with a shortest time or a shortest route from a current place to a destination.

Recently, electrically operated automobiles such as electric automobiles or plug-in hybrid automobiles have been popularly used. A cruising distance of the electrically operated automobile is short even when the electrically operated automobile uses electricity which a battery mounted on an own car discharges. Further, it takes time to fully charge the battery. Still further, a cost of electricity to be charged to a battery, and a carbon dioxide emission intensity [g/kWh] of carbon dioxide which is discharged when a fuel which a power station or the like uses for generating electricity is burned changes depending on a location where an automobile is parked or a time zone of a day that the automobile is parked. Accordingly, as the objective of a route search, an objective which differs from a conventional objective is requested such as parking in a time zone where a cost of electricity is low or the use of electricity having small carbon dioxide emission intensity. In such circumstances, when the combination of a plurality of objectives is requested instead of a single objective, the computation of a route search becomes complicated.

As a technique which overcomes such a drawback, for example, patent literature 1 discloses a technique which requests the computation of a traveling route when a value of a current monitoring variable goes beyond a restriction condition using a point of time that a automobile enters a local area as a reference.

### Citation List

### Patent Literature

[Patent literature 1] JP-A No. 2018-28554

### Summary of Invention

### Technical Problem

However, in the technique disclosed in patent literature 1, a traveling route guide device searches a traveling route of an electric automobile. However, a load necessary for processing of route search is liable to be large and hence, the search of an optimum route is difficult unless computation capacity of the traveling route guide device is constantly reinforced.

In view of such circumstances, on a highly functional automobile which is compatible with the electrification of an automobile or automatic driving, a controller having a high performance for controlling respective units of the automobile by computing numerical values of the respective units is mounted. However, in a time zone where the highly functional automobile is not used as a moving means since the highly functional automobile is being parked, the controller which is mounted on the highly functional automobile is not performing arithmetic operation processing or is not substantially performing such arithmetic operation processing. Accordingly, there exists a drawback that an operating rate of the controller mounted on the highly functional automobile is low. Further, in general, in the processing for performing a route search, each time the number of via points of an automobile is increased, an amount of processing is exponentially increased. Accordingly, for example, in an area where a plurality of via points exist in a delivery route, only with the use of a controller mounted on an automobile which is going to start, a load of arithmetic operation processing is increased and hence, an arithmetic operation cannot be performed before the automobile starts.

The present invention has been made in view of such circumstances, and it is an object of the present invention to search a moving route without increasing a computation load of a controller of a moving vehicle.

### Solution to Problem

According to the present invention, there is provided a route planning device which includes: a device side communication unit being connected to a plurality of vehicles on each of which a drive source, an energy storage unit capable of supplying energy to the drive source, and a controller are mounted via a network, the device side communication unit capable of performing communication with the plurality of vehicles; a position checking unit configured to check a via point which the vehicle passes between a start point at which the vehicle starts moving and a finish point at which the vehicle finishes the moving, and a position of the vehicle; an objective function decision unit configured to decide an objective function in conformity with an objective set in advance; a vehicle determination unit configured to determine, based on information collected from the plurality of vehicles via the device side communication unit, whether the plurality of vehicles are respectively a moving vehicle which is moving or is scheduled to move or a stopped vehicle which is stopping; and an arithmetic operation allocation decision unit configured to decide allocation of arithmetic operation processing for planning a route of the moving vehicle which moves by consuming energy supplied to the drive source from the energy storage unit with respect to the stopped vehicle where the objective function is computable, and allows the controller which the stopped vehicle has to perform an arithmetic operation via the device side communication unit.

### Advantageous Effects of Invention

According to the present invention, by allocating the arithmetic operation processing for planning the route of the moving vehicle and by allowing the controllers which the plurality of stopped vehicles have to perform the arithmetic operation, an arithmetic operation result can be acquired even without increasing an arithmetic operation load of the controller which the moving vehicle has.

The objects, the configurations and the advantageous effects other than the above described will become apparent from an embodiment described hereinafter.

### Brief Description of Drawings

Fig. 1 is a schematic view showing a configurational example of a moving route search system according to one embodiment of the present invention.
Fig. 2 is a schematic configurational view showing an example where a control device mounted on a hybrid automobile according to one embodiment of the present invention is applied to a series type hybrid automobile.
Fig. 3 is a block diagram showing a configurational example of a hardware of a controller according to one embodiment of the present invention.
Fig. 4 is a block diagram showing an internal configurational example of the controller according to one embodiment of the present invention.
Fig. 5 is a block diagram showing an internal configurational example of a management server according to one embodiment of the present invention.
Fig. 6 is a block diagram showing a configurational example of a hardware of a computing device according to one embodiment of the present invention.
Fig. 7 is a view showing an example of route search processing which the management server, stopped vehicles and a moving vehicle according to one embodiment of the present invention perform in an associated manner.
Fig. 8 is a view showing a display example of a target setting screen of a moving time, a moving cost and CO₂ emissions of an automobile according to one embodiment of the present invention.
Fig. 9 is a flowchart showing an example of processing where a vehicle determination unit according to one embodiment of the present invention determines a stopped vehicle.
Fig. 10 is an explanatory view showing an example of processing performed by a search area processing unit according to one embodiment of the present invention.

### Description of Embodiment

Hereinafter, an embodiment for carrying out the present invention is described with reference to the attached drawings. In this specification and the drawings, configurational elements having substantially the same functions or configurations are indicated by the same symbols, and the repeated description of these configurational elements is omitted.

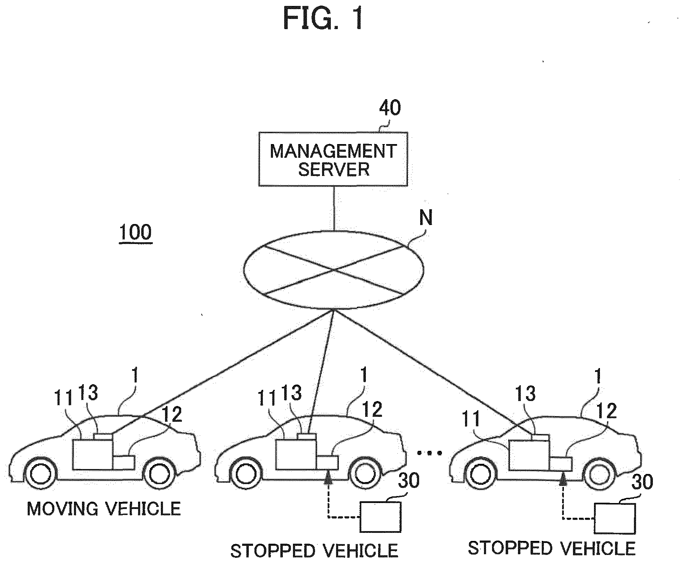

Fig. 1 is a schematic view showing a configurational example of a moving route search system 100.

The moving route search system 100 includes vehicles 1 and a management server 40 which are connected to a network N, and can perform the transmission and reception of data between the vehicles 1 and the management server 40. The network N is, for example, the Internet.

A controller 11, a battery 12 and a vehicle side communication unit 13 are mounted on each vehicle 1. In the vehicle 1, respective units mounted on the vehicle 1 are operated using electricity discharged from the battery 12 as a power source, and the vehicle 1 moves. However, as described later, the vehicle 1 can move using a drive force of an engine 17 as a power source.

The controller 11 controls operations of the respective units mounted on the vehicle 1.

The battery 12 is a chargeable/dischargeable secondary battery, and is used as an example of an energy storage unit which stores electric energy as energy. The battery 12 is charged with electricity supplied from an electricity supply device 30 during a period in which the vehicle 1 is parked or is stopped in an electricity charging area. An arrow indicated by a broken line which is directed to the battery 12 from the electricity supply device 30 in the drawing indicates a supply line of electricity. As an example of the energy storage unit, a fuel tank (not shown in the drawing) which.can supply fossil fuel (gasoline, light oil or the like) to the engine 17 is also mounted on the vehicle 1.

The vehicle side communication unit 13 transmits an operation situation of the controller 11, a situation such as whether the vehicle 1 is stopped or is moving to the management server 40 (one example of the route planning device) via the network N. The vehicle side communication unit 13 outputs an instruction received from the management server 40 to the controller 11.

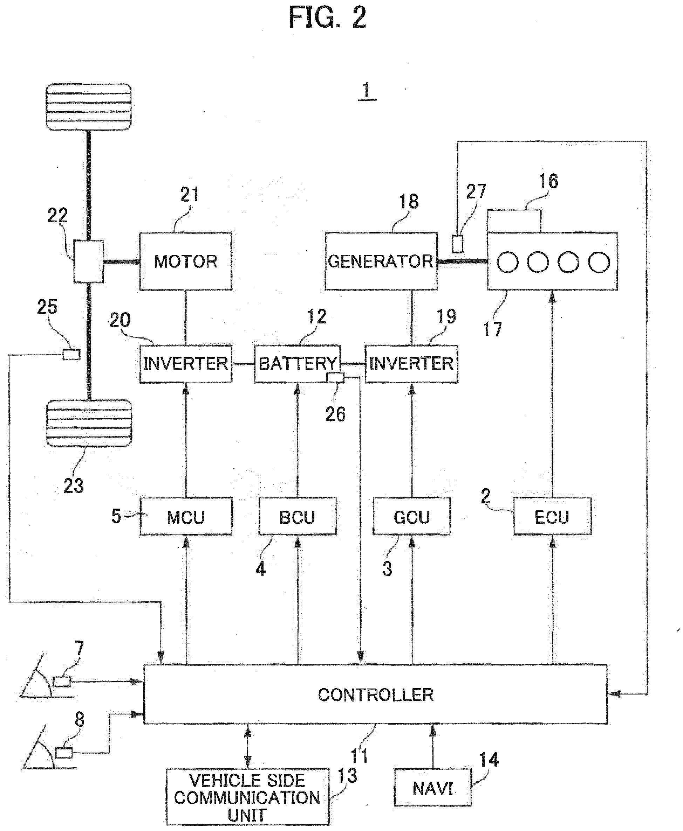

In this embodiment, the vehicle 1 stopped in a parking area or the like is also referred to as "stopped vehicle", and the vehicle 1 traveling in a state where a driver or the like rides on the vehicle 1 is also referred to as "moving vehicle". In the stopped vehicle, the battery 12 is being charged with electricity which the electricity supply device 30 installed in a charging area supplies, or the controller 11 is being stopped or is performing a control of stopping or processing with a light load. In many cases, the charging area is, for example, a parking area which a user manages. However, the charging area may be a parking area owned by a shop such as a convenience store. In the moving vehicle, a motor 21 (see Fig. 2 described later) is driven by discharging the battery 12, and the controller 11 is performing processing with a heavy load for controlling operations of the respective units in the moving vehicle.

The management server 40 checks a state of the vehicle 1, and a use situation of the controller 11 mounted in the vehicle 1. When the vehicle 1 is a stopped vehicle, a load of the controller 11 is low or the controller 11 is not used. Accordingly, the management server 40 makes use of the controller 11 of the stopped vehicle for obtaining a moving route of the moving vehicle. For this objective, the management server 40 instructs a plurality of stopped vehicles to start arithmetic operation processing for obtaining the moving route. When the controllers 11 of the stopped vehicles receive an instruction from the management server 40 via the vehicle side communication unit 13, the controllers 11 of the stopped vehicles start arithmetic operation processing. Then, the controllers 11 of the stopped vehicles transmit an arithmetic operation result to the management server 40 via the vehicle side communication unit 13.

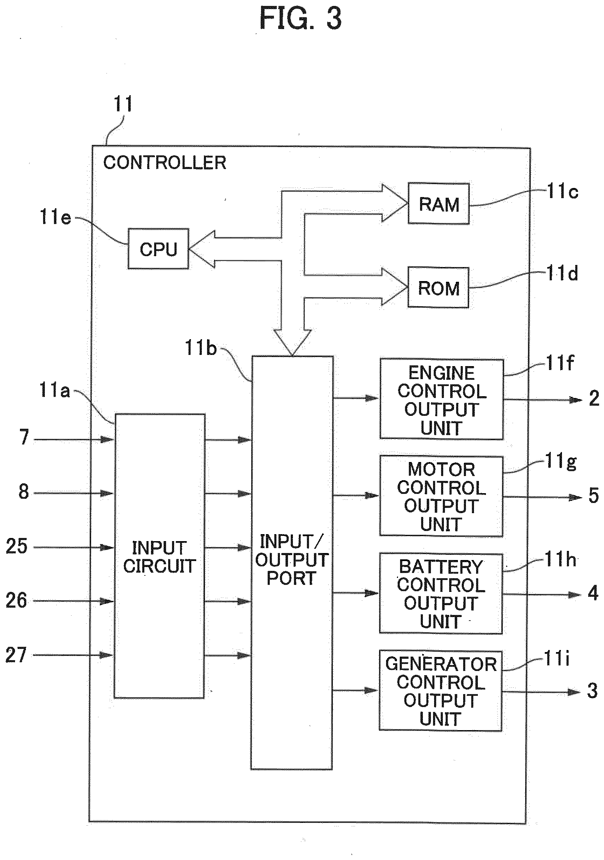

The moving route search system 100 is, for example, applicable to a case where a delivery company or a car sharing company manages a plurality of automobiles. Although a delivery company or the like possesses a large number of vehicles 1, it is not always the case that all vehicles 1 are constantly moved. Accordingly, the controllers 11 which are mounted on the plurality of respective stopped vehicles are operated based on an instruction from the management server 40. By allowing the controllers 11 mounted on the plurality of stopped vehicles to perform parallel arithmetic operation processing, even when a route is complicated, the management server 40 can obtain an arithmetic operation result within a short time, and can notify the moving vehicle of the route obtained by an arithmetic operation. Next, an internal configurational example of the vehicle 1 is described with reference to Fig. 2 and Fig. 3.

Fig. 2 is a schematic configurational view showing an example where a control device mounted on a hybrid automobile according to one embodiment of the present invention is applied to a series type hybrid automobile.

A navigation device 14 (described as "NAVI" in the drawing) measures a current position of the vehicle 1 in such a manner that the navigation device 14 receives GPS signals which a plurality of global positioning system (GPS) satellites high above the vehicle 1 (hybrid automobile) which includes an internal combustion engine (engine 17) as a drive source transmit via satellite electric waves. Then, the navigation device 14 displays the current position of the vehicle 1 on a map displayed on a display device in the vehicle 1 in a superposed manner. The measurement of the current position by the navigation device 14 may also use base stations of mobile phone terminals, access points of Wi-Fi (registered trademark) and the like in combination. Further, the navigation device 14 acquires traffic information around the vehicle 1 by receiving electric waves transmitted from light beacons installed on an ordinary road, for example. Information on the current position of the vehicle 1 which the navigation device 14 measures, map information including surrounding where the vehicle 1 travels and a route to the destination, and traffic information are outputted to the controller 11 used as the vehicle, control device. The traffic information may include weather information in a search area of the moving route.

An accelerator opening sensor 7 and a brake switch 8 are mounted in a cabin of the vehicle 1. The accelerator opening sensor 7 detects a step-in amount of an accelerator pedal, which is, accelerator opening. The brake switch 8 detects whether or not a driver steps in a brake pedal.

The engine 17 is a 4 cylinder gasoline engine for an automobile which uses spark ignition type combustion, and is an example of an internal combustion engine. The engine 17 includes a starter 16 for starting the engine 17. A crank angle sensor 27 for detecting a rotational angle of the crankshaft is mounted on a crankshaft of the engine 17, and a generator18 is connected to the other end of the crankshaft.

A generator control device, which is, a generator control unit (GCU) 3 controls driving of the generator 18 via an inverter 19 so as to allow the inverter 19 to charge the battery 12 at a predetermined voltage. The generator 18 generates electricity by being driven by the engine 17, and charges the battery 12 via the inverter 19.

A battery control device, which is, a battery control unit (BCU) 4 controls charging and discharging of the battery 12 based on a battery request output from the controller 11. A battery voltage sensor 26 which measures an internal voltage of the battery 12 is mounted on the battery 12, and the controller 11 constantly checks a voltage of the battery 12.

A motor control device, which is, a motor control unit (MCU) 5 controls an inverter 20 (and the motor 21) based on a motor request output from the controller 11. Electricity is supplied to the inverter 20 from the battery 12 which is electrically connected to the inverter 20. The inverter 20 converts direct current electricity discharged from the battery 12 into alternate current electricity, and supplies alternate current electricity to the motor 21. The motor 21 is connected to wheels 23 by way of a speed reduction gear 22. A vehicle speed sensor 25 is mounted on a drive shaft for the wheels 23.

Respective signals outputted from the vehicle speed sensor 25, the battery voltage sensor 26, and the crank angle sensor 27 are transmitted, to the controller 11. Respective signals outputted from the accelerator opening sensor 7 and the brake switch 8 are also transmitted to the controller 11.

The controller 11 is mounted on a vehicle (the vehicle 1) which travels by an output from at least one of the internal combustion engine (the engine 17) and an electrically operated drive unit (the motor 21) . As the controller 11, for example, a vehicle control unit (VCU) is used. The controller 11 computes a request torque of a driver who rides on the vehicle 1 based on an output signal of the accelerator opening sensor 7. That is, the accelerator opening sensor 7 is used as a request torque detection sensor which detects a request torque supplied to the engine 17 and the motor 21. The controller 11 also determines the presence or the absence of a deceleration request of the driver based on an output signal of the brake switch 8. The controller 11 also computes a remaining amount of electricity of the battery 12 based on an output signal of the battery voltage sensor 26. The controller 11 also computes a rotational speed of the engine 17 based on an output signal of the crank angle sensor 27. Then, the controller 11 computes optimum operation amounts of the respective devices such as a driver request obtained from outputs of the above-mentioned respective sensors, an engine request output, a motor request output and a battery request output based on a driving state of the vehicle 1.

The engine request output computed by the controller 11 is transmitted to an engine control device, which is, an engine control unit (ECU) 2. The ECU 2 controls the engine 17 based on the request output from the controller 11. Specifically, the ECU 2 controls the starter 16 in addition to a fuel injection unit, an ignition unit and a throttle valve not shown in the drawings. Further, a motor request output computed by the controller 11 is transmitted to the MCU 5. A battery request output computed by the controller 11 is transmitted to the BCU 4.

Next, the internal configuration of the controller 11 according to one embodiment is described.

Fig. 3 is a block diagram showing a configurational example of a hardware of the controller 11.

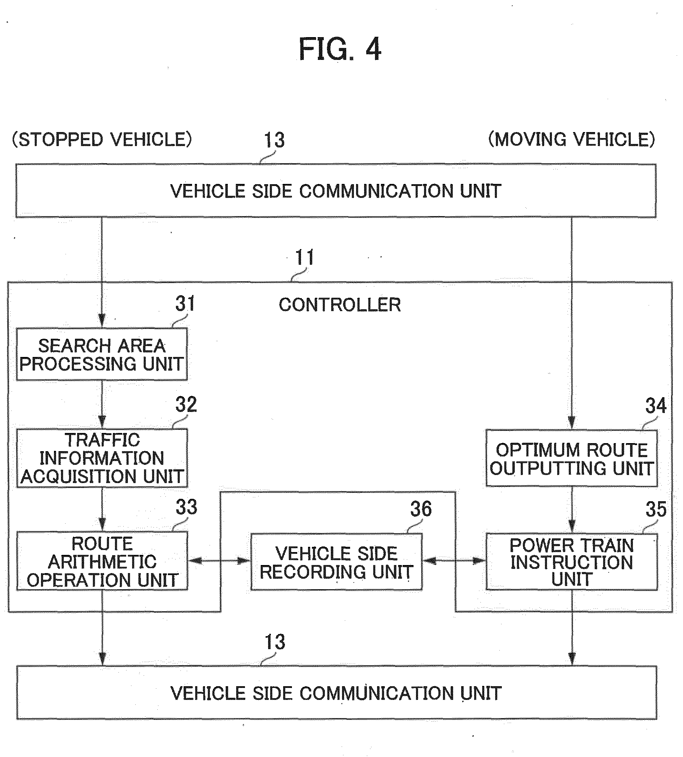

Respective output signals outputted from the accelerator opening sensor 7, the brake switch 8, the vehicle speed sensor 25, the battery voltage sensor 26, and the crank angle sensor 27 are inputted to an input circuit 11a of the controller 11. However, input signals are not limited to such signals. The input signals of the respective sensors inputted to the input circuit 11a are transmitted to an input port (not shown in the drawing) in an input/output port 11b. The values transmitted to the input port are stored in a RAM 11c, and are subjected to arithmetic operation processing by a CPU 11e. A control program in which contents of the arithmetic operation processing are described is written in a ROM 11d in advance. Functions of a search area processing unit 31, a traffic information acquisition unit 32, a route arithmetic operation unit 33, an optimum route outputting unit 34, and a power train instruction unit 35 shown in Fig. 4 and described later are realized by the CPU 11e.

Values indicating operation amounts of objects to be controlled (the engine 17, the generator 18, the battery 12, the motor 21, and the like) computed based on the control program are stored in the RAM 11c and, thereafter, are transmitted to output ports (not shown in the drawing) in the input/output port 11b and are transmitted to the respective devices via respective output units. In this embodiment, as the output units, an engine control output unit 11f, a motor control output unit 11g, a battery control output unit 11h, and a generator control output unit 11i are provided. Circuits of the respective output units are connected to the ECU 2, the MCU 5, the BCU 4 and the GCU 3. In Fig. 3, the control devices (the ECU 2, the MCU 5, the BCU 4 and the GCU 3) for objects to be controlled are provided separately from the controller 11. However, the configuration of the hardware of the controller 11 is not limited to such a configuration, and functional units of the respective devices which correspond to the control devices may be incorporated in the controller 11.

Fig. 4 is a block diagram showing an internal configurational example of the controller 11.

The controller 11 includes the search area processing unit 31, the traffic information acquisition unit 32, the route arithmetic operation unit 33, the optimum route outputting unit 34, and the power train instruction unit 35. With respect to functions of the controller 11, different parts are operated between a case where the vehicle 1 is a stopped vehicle and a case where the vehicle 1 is a moving vehicle.

A vehicle side recording unit 36 is connected to the controller 11. The vehicle side recording unit 36 is, for example, formed of a recording device such as the RAM 11c shown in Fig. 3, a hard disk drive (HDD) or a solid state drive (SSD) not shown in the drawing.

First, the case where the vehicle 1 is a stopped vehicle is described. In the case where the vehicle 1 is a stopped vehicle, the vehicle side communication unit 13, the search area processing unit 31, the traffic information acquisition unit 32, the route arithmetic operation unit 33 and the vehicle side recording unit 36 are operated. Then, in the case where the route planning device (the management server 40) determines that the vehicle 1 is a stopped vehicle, a controller (the controller 11) performs arithmetic operation processing allocated from a route planning device (the management server 40) via a vehicle side communication unit (the vehicle side communication unit 13), and transmits an arithmetic operation result to the route planning device (the management server 40).

A vehicle side communication unit (the vehicle side communication unit 13) can perform communication with the route planning device (the management server 40) connected to the network N. An identification ID of a currently connected network, and information on the current position of the vehicle 1 acquired from the navigation device 14 are transmitted to the management server 40. Then, in a case where the management server 40 determines that the vehicle 1 is a stopped vehicle, the vehicle side communication unit 13 receives a start instruction of a route arithmetic operation based on the stopped vehicle from the management server 40. This start instruction includes information such as a current position of a moving vehicle which is an object subjected to a route arithmetic operation, a start point at which the moving vehicle starts its moving, a finish point at which the moving vehicle finishes its moving, and via points.

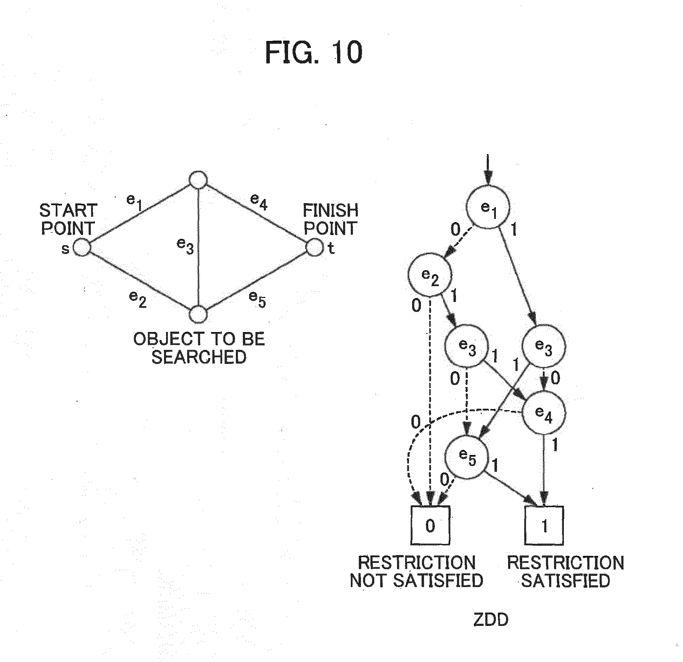

A search area processing unit (the search area processing unit 31) processes a search area designated by the route planning device (the management server 40). The search area is an area defined so as to prevent an excessive increase of an arithmetic operation amount when a route is searched. An area where a moving vehicle travels is defined by the search area. For example, a defined area such as an area of a specific city, an area of a specific ward, or an area of a specific town is used as a search area. The search area processing unit 31 reduces a search space by processing a search area using a zero-suppressed binary decision diagram (ZDD) described later and shown in Fig. 10, for example.

A traffic information acquisition unit (the traffic information acquisition unit 32) acquires traffic information in a search area processed by the search area processing unit 31. The traffic information can be acquired from the navigation device 14, for example. The traffic information includes, for example, at least one of information on a map including the map, intersections and places where a traffic signal is installed, information on a traffic jam, information indicating a cost of electricity chargeable to the battery 12 in a certain zone or in a certain time zone, information on shops where a charger is installed, information on available parking lots and the like.

An arithmetic operation unit (the route arithmetic operation unit 33) performs arithmetic operation processing based on a processed search area and processed traffic information. A route along which a moving vehicle can travel efficiently is acquired by such arithmetic operation processing. Consider a situation where a plurality of via points exist between a start point and a finish point. In a case where a moving vehicle is caught in a traffic jam when a route having a short distance on a map is selected, the moving vehicle, cannot reach the finish point at a fastest speed. In view of the above, by allowing the route arithmetic operation unit 33 to perform an arithmetic operation of a route by taking into account traffic information, a moving vehicle can reach a finish point as fast as possible by avoiding a traffic jam even when a route of the moving vehicle becomes longer.

The vehicle side recording unit 36 records a arithmetic operation result acquired by an arithmetic operation performed by the route arithmetic operation unit 33 as a history obtained by performing an arithmetic operation with respect to a moving vehicle. As described later, the vehicle side recording unit 36 also records the contents of instructions instructed to a power train of a moving vehicle as a history of the moving vehicle.

Then, the vehicle side communication unit 13 transmits the arithmetic operation result acquired by an arithmetic operation performed by the route arithmetic operation unit 33 to the management server 40. In this embodiment, the arithmetic operation result includes, for example, a route recommended to a moving vehicle, CO₂ emissions discharged when the moving vehicle travels in accordance with the route and the like.

Next, the case where the vehicle 1 is a moving vehicle is described. In the case where the vehicle 1 is a moving vehicle, the vehicle side communication unit 13, the optimum route outputting unit 34, the power train instruction unit 35, and the vehicle side recording unit 36 are operated.

The vehicle side communication unit 13 receives an optimum route selected by the management server 40.

The optimum route outputting unit 34 outputs the optimum route which the vehicle side communication unit 13 receives from the management server 40 to the navigation device 14, for example. The optimum route of the moving vehicle is displayed on a display panel of the navigation device 14.

The power train instruction unit 35 performs an instruction to the power train so that the vehicle 1 can travel in accordance with the optimum route which the vehicle side communication unit 13 receives. The power train is a general term of devices relating to traveling of the vehicle 1. The power train includes, for example, the engine 17, the generator 18, the motor 21, the speed reduction gear 22 and the like. The power train instruction unit 35 records a driving history including instruction values for respective parts instructed to the power train and the like to the vehicle side recording unit 36.

The vehicle side communication unit 13 transmits a driving history of a moving vehicle read from the vehicle side recording unit 36 to the management server 40. Timing that the vehicle side communication unit 13 transmits the driving history may be real time timing or timing after the vehicle 1 stops.

Next, an internal configurational example of the management server 40 is described.

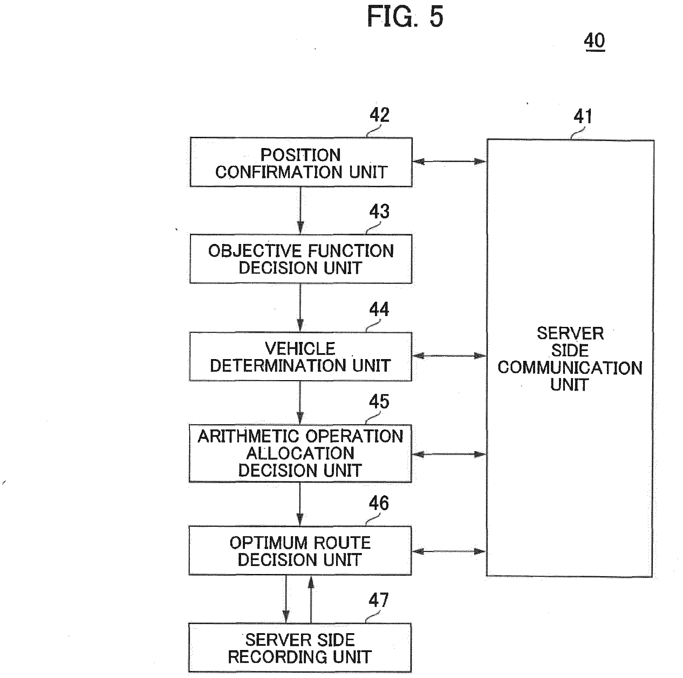

Fig. 5 is a block diagram showing the internal configurational example of the management server 40.

The management server 40 includes a server side communication unit 41, a position checking unit 42, an objective function decision unit 43, a vehicle determination unit 44, an arithmetic operation allocation decision unit 45, an optimum route decision unit 46, and a server side recording unit 47.

A device side communication unit (the server side communication unit 41) is connected to a vehicle (the vehicle 1) on which a motor (the motor 21) used as a drive source and a battery (the battery 12) capable of supplying electricity for operating the motor (the motor 21) are mounted via a network (the network N), and is capable of performing communication with a plurality of vehicles (the vehicles 1) . The server side communication unit 41 performs mutual communication with the position checking unit 42, the vehicle determination unit 44, the arithmetic operation allocation decision unit 45, and the optimum route decision unit 46.

A position checking unit (the position checking unit 42) checks the via points which a vehicle (the vehicle 1) passes between a start point at which the vehicle (the vehicle 1) stars its moving and a finish point at which the vehicle (the vehicle 1) finishes its moving, and the position of the vehicle (the vehicle 1) . For this purpose, the position checking unit 42 receives information indicating the current positions of the plurality of respective vehicles 1 via the server side communication unit 41. For example, the position checking unit 42 receives information indicating the current positions of the stopped vehicles which the navigation device 14 of the stopped vehicles measure, and receives arithmetic operation results transmitted from the stopped vehicles. Further, the position checking unit 42 receives information indicating the current positions of the stopped vehicles which the navigation devices 14 of the moving vehicle measures, and receives a driving history transmitted from the moving vehicle.

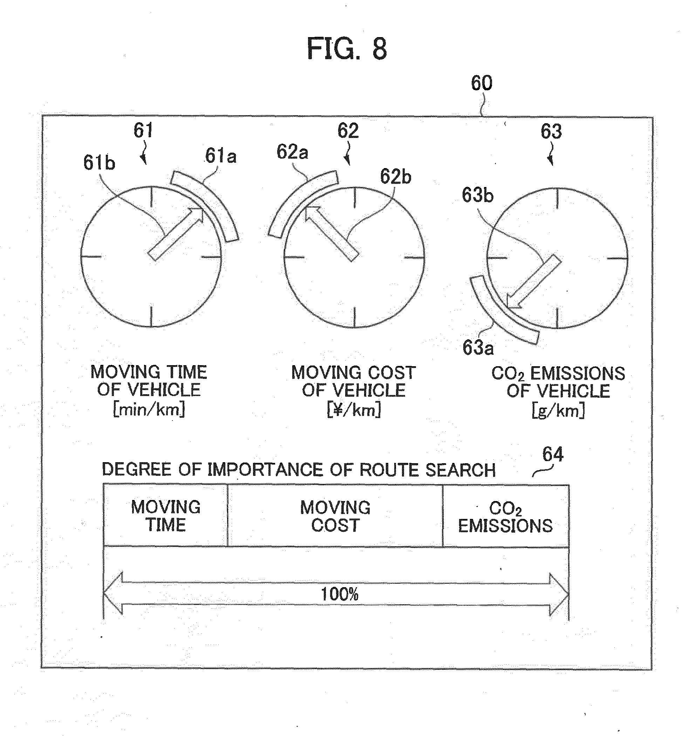

An objective function decision unit (the objective function decision unit 43) decides an objective function in conformity with an objective set in advance. The objective function is a function which satisfies one objective selected from a plurality of objectives set in advance or a plurality of objectives combined with each other at a predetermined rate. The obj ective function is a function used for deciding an optimum route of a moving vehicle. The objective function decision unit (the objective function decision unit 43) decides an objective function based on an objective set through an objective setting screen (the objective setting screen 60) shown in Fig. 8 and described later.

The objective includes at least one of shortening of a moving time of a moving vehicle which the moving vehicle takes to travel from a start point to a finish point, the reducing energy consumed by the moving vehicle, the reducing a purvey cost of energy consumed by the moving vehicle, and the reducing CO2 emissions discharged from the moving vehicle along with the moving of the moving vehicle, and shortening of a route from the start point to the finish point. Further, in this embodiment, energy includes at least one of thermal energy obtained by burning fossil fuel and electric energy. An optimum route of a moving vehicle changes based on an objective set in advance by a user such as an objective where priority is assigned to a traveling cost, an objective where priority is assigned to an CO₂ emissions during the moving of the moving vehicle or an objective how to allocate the combination of these objectives.

A vehicle determination unit (the vehicle determination unit 44) determines whether the vehicles (the vehicle 1) are respectively a moving vehicle or a vehicle which is scheduled to move or a stopped vehicle which is stopping based on information collected from the plurality of vehicles (the vehicle 1) via the device side communication unit (server side communication unit 41) . For example, the vehicle determination unit 44 determines that the vehicles 1 are stopped vehicles based on whether or not the vehicles 1 are moved after a lapse of a predetermined time from the current positions of the respective vehicles 1 which the position checking unit 42 has checked.

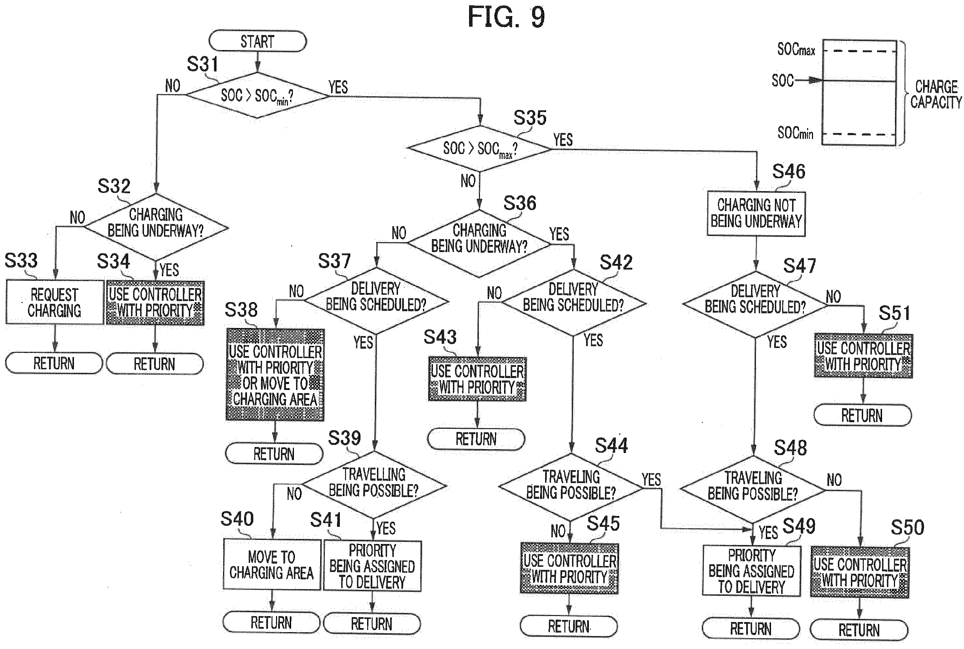

Further, as shown in Fig. 9 and described later, the vehicle determination unit (the vehicle determination unit 44) determines that arithmetic operation processing can be allocated such that priority can be assigned, among the stopped vehicles on each of which a battery (the battery 12) is mounted, to the stopped vehicle where a remaining amount of the battery (the battery 12) is a predetermined value or less and the battery is in a state where energy is supplied from an electricity supply device (the electricity supply device 30 shown in Fig. 1) to the battery (the battery 12) or to the stopped vehicle where charging of a battery (the battery 12) is completed and delivery of the stopped vehicle is not scheduled. In this state, the vehicle determination unit (the vehicle determination unit 44) instructs the stopped vehicle which is not in a state where energy is supplied to the battery (the battery 12) from the electricity supply device (the electricity supply device 30) and is not scheduled to be delivered to move to a place where energy can be supplied to the battery (the battery 12) from the electricity supply device (the electricity supply device 30) .

An arithmetic operation allocation decision unit (the arithmetic operation allocation decision unit 45) decides the allocation of arithmetic operation processing for planning a route of a moving vehicle which moves by consuming energy supplied to a drive source (the motor 21) from an energy storage unit (the battery 12) with respect to a stopped vehicle where an objective function is computable, and allows a controller (the controller 11) which the stopped vehicle has to perform an arithmetic operation via a device side communication unit (the server side communication unit 41). In such processing, the arithmetic operation allocation decision unit (the arithmetic operation allocation decision unit 45) decides the allocation of arithmetic operation processing based on a remaining amount of the battery (the battery 12) which is mounted on the stopped vehicle, a supply state of energy from the electricity supply device (the electricity supply device 30) to the battery (the battery 12) which is mounted on the stopped vehicle, an area including a via point to which the moving vehicle is delivered, and a vehicle delivery plan where a time zone in which moving vehicle is delivered is defined.

Then, the arithmetic operation allocation decision unit 45 allows the vehicle 1 determined to be the stopped vehicle to perform arithmetic operation processing for searching a route of a moving vehicle. In a case where the plurality of vehicles 1 exist, the arithmetic operation allocation decision unit 45 properly allocates arithmetic operation processing to be performed to the controllers 11 mounted on the respective vehicles 1. Further, the arithmetic operation allocation decision unit 45 transmits allocated arithmetic operation processing to each stopped vehicle via the server side communication unit 41.

A route decision unit (the optimum route decision unit 46) decides a route of a moving vehicle based on an arithmetic operation result of arithmetic operation processing collected from a plurality of stopped vehicles via a device side communication unit (a server side communication unit 41), and notifies the moving vehicle of the decided route. The decided route is, for example, an optimum route of the moving vehicle. The arithmetic operation result is received by the server side communication unit 41 from the respective stopped vehicles. The optimum route decision unit 46 records a decided optimum route to the server side recording unit 47. The optimum route decision unit 46 transmits an optimum route decided by the optimum route decision unit 46 to a moving vehicle via the server side communication unit 41. Then, the optimum route decision unit 46 records a moving history or a driving history acquired from the moving vehicle via the server side communication unit 41 to the server side recording unit 47. The moving history is the history of the moving vehicle which moves along the optimum route. The driving history is a history of a handle steering angle when a driver drives the moving vehicle, a step-in situation of acceleration and the like.

The device side recording unit (the server side recording unit 47) records a route which the route decision unit (the optimum route decision unit 46) decides. Then, the route decision unit (the optimum route decision unit 46) notifies the moving vehicle of a route which is decided in the past from the device side recording unit (the server side recording unit 47) when the condition for deciding a route of this time is almost equal to or substantially equal to the condition when the route was decided in the past.

Next, the configuration of the hardware of the computing device 50 which forms the management server 40 is described.

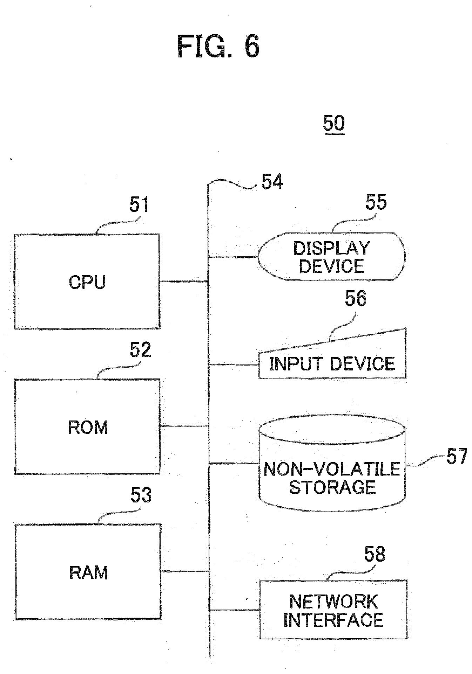

Fig. 6 is a block diagram showing the configuration of an example of the hardware of the computing device 50. The computing device 50 is the hardware used as a computer operable as the management server 40.

The computing device 50 includes a central processing unit (CPU) 51, a read only memory (ROM) 52, a random access memory (RAM) 53, and a bus 54 to which the CPU 51, the ROM 52 and the RAM 53 are connected respectively. The computing device 50 also includes non-volatile storage 57 and a network interface 58.

The CPU 51 reads a program code of software that realizes respective functions relating to this embodiment from the ROM 52 and loads the program code to the RAM 53, and executes the program. Variables, parameters, and the like which are generated in the course of the arithmetic operation processing of the CPU 51 are temporarily written in the RAM 53, and these variables, parameters and the like are suitably read by the CPU 51. In place of the CPU 51, a micro processing unit (MPU) may also be used. The functions of the position checking unit 42, the objective function decision unit 43, the vehicle determination unit 44, the arithmetic operation allocation decision unit 45 and the optimum route decision unit 46 shown in Fig. 5 are realized by the CPU 51.

A display device 55 is, for example, a liquid crystal display monitor. The display device 55 outputs a screen for displaying a result of processing performed in the computing device 50 or the like to an operator (for example, the objective setting screen 60 shown in Fig. 8 described later) . As an input device 56, for example, a keyboard, a mouse and the like is used, and the operator can perform predetermined manipulation inputting and instructions. The operator can set an objective via the input device 56. The display device 55 and the input device 56 may not be provided depending on the configurations of the devices. In this case, an information processing terminal such as a personal computer (PC) which is connectable to the management server 40 via the network N has the display device 55 and the input device 56, a screen (for example, the objective setting screen 60 shown in Fig. 8 described later) is displayed on the display device 55, and a user may set an objective.

As the non-volatile storage 57, it is possible to use an information recording medium such as, for example, a hard disc drive (HDD), a solid state drive (SSD), a flexible disc, an optical disc, a magneto-optical disc, a CD-ROM, a CD-R, a magnetic tape or a non-volatile memory. In the non-volatile storage 57, programs for making the computing device 50 functional are recorded besides an operating system (OS) and various parameters. The ROM 52 and the non-volatile storage 57 permanently record programs, data and the like necessary for operating the CPU 51. The ROM 52 and the non-volatile storage 57 are used as an example of computer-readable nontransitory recording medium that stores programs executed by the computing device 50. The server side recording unit 47 shown in FIG. 5 is configured by the non-volatile storage 57.

As the network interface 58, for example, a network interface card (NIC) or the like is used. Various data can be transmitted and received between the devices via a local area network (LAN), a dedicated line and the like connected to a terminal of the NIC. The server side communication unit 41 transmits and receives various data between the server side communication unit 41 and the vehicles 1 by operating the network interface 58.

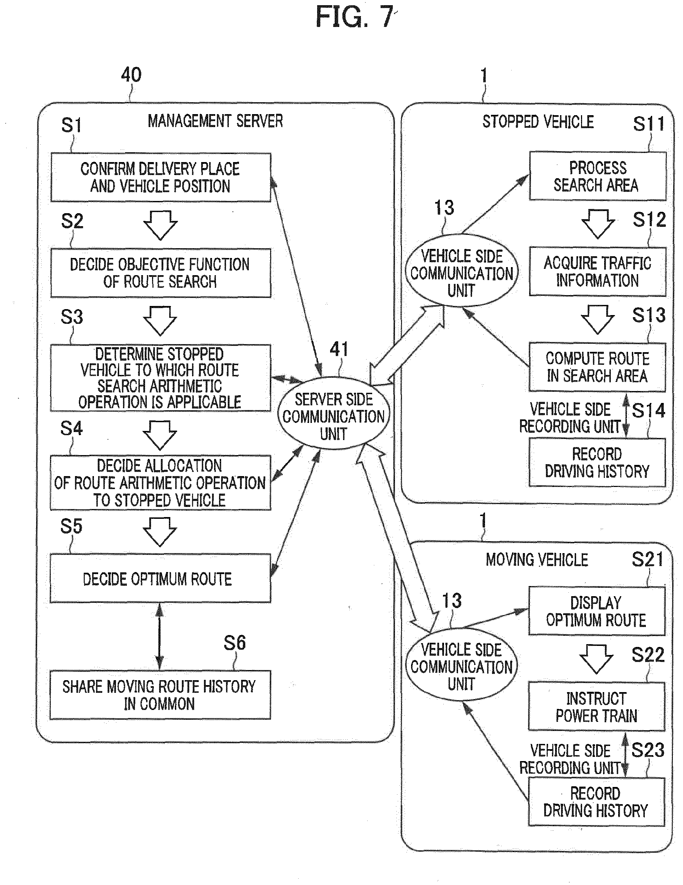

Fig. 7 is a view showing an example of route search processing that the management server 40, the stopped vehicle and the moving vehicle perform in an associated manner. This route search processing is one example of the route planning method according to this embodiment. In Fig. 7, the illustration of the network N is omitted.

First, the position checking unit 42 of the management server 40 checks the delivery places and the vehicle positions of the respective vehicles 1 based on positional information on the stopped vehicles and the moving vehicle that the server side communication unit 41 receives (S1). Next, the objective function decision unit 43 determines an objective function which conforms to an objective of a route search (S2). In this embodiment, the objective function decision unit 43 aims at the minimization of a value obtained by combining at least one or more of a moving time "min/km" of the vehicle 1, an energy cost during the moving of the vehicle 1 (hereinafter abbreviated as "moving cost") "¥/km" and CO₂ emissions during the moving of the vehicle 1 "g/km". The objective function decision unit 43 can decide weighting of respective elements in combining two or more elements from the moving time of the vehicle, 1, the moving cost of the vehicle 1, and CO₂ emissions during the moving of the vehicle 1.

The objective setting screen 60 which allows a user to set an objective is described hereinafter.

Fig. 8 is a view showing a display example of the moving time, the moving cost of the vehicle 1, and CO₂ emissions of the vehicle 1.

A user can set an objective in a route search of a moving vehicle via the objective setting screen 60. The objective setting screen 60 is displayed on the display device 55 of the management server 40 or an information processing terminal not shown in the drawing which is connected to the management server 40. The objective setting screen 60 includes a moving time setting unit 61, a moving cost setting unit 62, and a CO₂ emissions setting unit 63.

The moving time setting unit 61 includes a target bar 61a and a current value 61b. The target bar 61a indicates a moving time of a moving vehicle set in the past. The current value 61b indicates an average value of moving times set to a plurality of vehicles 1.

The moving cost setting unit 62 includes a target bar 62a and a current value 62b. The target bar 62a indicates a moving cost of a moving vehicle set in the past. The current value 62b indicates an average value of moving costs set to a plurality of vehicles 1.

The CO₂ emissions setting unit 63 includes a target bar 63a and a current value 63b. The target bar 63a indicates CO₂ emissions of a moving vehicle set in the past. The current value 63b indicates an average value of CO₂ emissions set to a plurality of vehicles 1.

On meter portions of the moving time setting unit 61, the moving cost setting unit 62 and the CO₂ emissions setting unit 63, for example, certain values which increase in a clockwise direction are displayed. A user can suitably change the current values 61b, 62b, 63b while watching the values displayed on the meter portions.

A degree-of-importance display unit 64 indicating a degree of importance of a route search is disposed on a lower portion of the objective setting screen 60. The degree-of-importance display unit 64 is set such that rates of the degrees of importance of three kinds become 100% in total. A user can change the rates of the degrees of importance displayed on the degree-of-importance display unit 64 by changing the current value 61b of the moving time setting unit 61, the current value 62b of the moving cost setting unit 62, and the current value 63b of the CO₂ emissions setting unit 63.

For example, in a case where the shortest moving time from a point that the moving of a moving vehicle starts to a point that the moving of the moving vehicle finishes forms an objective, the only a moving time is displayed on the degree-of-importance display unit 64, and a moving cost and CO₂ emissions are set to values close to zero. In a case where the suppression of a moving cost and the shortest moving time form an objective, only the moving time and the moving cost are displayed on the degree-of-importance display unit 64. In a case where searching of a route including three kinds of degrees of importance form an objective, the moving time, the moving cost and CO₂ emissions are displayed on the degree-of-importance display unit 64. In any cases, a user can set the values by arbitrarily moving the current values 61b, 62b, 63b. Then, in the objective function decision unit 43 shown in Fig. 5, objective functions are decided corresponding to the rates of the degrees of importance set in the objective setting screen 60.

For example, when the vehicle 1 which a user possesses is an electric automobile, a moving cost per kwh of electricity used for charging and CO₂ emissions change depending on an area, a time zone and a charging speed. For example, in a charging area where electricity generated by a thermal power plant is supplied, a moving cost per kwh and CO₂ emissions are high. However, the battery 12 can be quickly charged and hence, a time necessary for full charging can be shortened. On the other hand, in a charging area where electricity generated by a solar power plant is supplied, a moving cost per kwh and CO₂ emissions are low. However, the battery 12 cannot be quickly charged and hence, a time necessary for full charging is prolonged. Further, the battery 12 cannot be charged at night and on a cloudy day. Accordingly, in processing for searching an optimum route according to this embodiment, an arithmetic operation is performed by taking into account a value and a cost that such electricity possesses.

Further, the objective differs depending on the element that a user wants to minimize. For example, on a day that luggage loaded on a moving vehicle is large, it is necessary to decide a route which enables a moving vehicle to move with the shortest time. On the other hand, on a day that the amount of the luggage is small, priority is likely to be assigned to the minimization of a moving cost rather than a moving time. Further, a user who emphasizes an environmental factor such as renewable energy 100% (RE100) often assigns priority to a route which can minimize CO₂ emissions. Accordingly, the user can freely select an objective of searching a route in conformity with various application scenes.

Again, returning to Fig. 7, the processing performed by the management server 40 is described.

After the processing in step S2 is finished, the vehicle determination unit 44 determines a stopped vehicle capable of performing an arithmetic operation processing based on positional information on the plurality of vehicles 1 (S3). In a wireless network, a large number of cells which define communicating ranges are provided. So long as the vehicles 1 are in these cells, the vehicles can perform communication with each other in the same cell. Accordingly, in a case where the vehicles 1 are stopped vehicles, the network (cell) to which the controllers 11 of the vehicles 1 are connected is not changed. However, in a case where the vehicles 1 are moving vehicles, corresponding to the moving of the vehicles 1, the networks (cells) to which the controllers 11 of the vehicles 1 are connected are switched. Accordingly, a vehicle determination unit (the vehicle determination unit 44) determines that the vehicle 1 connected to the network which has no change for a fixed time or more is the stopped vehicle. The vehicle determination unit 44 may send a living checking signal to the vehicle 1, and may determine whether or not the vehicle 1 is the stopped vehicle based on a response signal received from the vehicle 1. The detailed processing flow for determining the stopped vehicle 1 in step S3 is described later with reference to Fig. 9.

In this embodiment, the controllers 11 of the plurality of stopped vehicles perform a route search of a moving vehicle or a vehicle scheduled to move by performing a parallel computation of arithmetic operation processing respectively allocated from the management server 40. Accordingly, the arithmetic operation allocation decision unit 45 decides allocation of route arithmetic operation to the stopped vehicles (S4). Specifically, the arithmetic operation allocation decision unit 45 decides allocated loads of arithmetic operation processing in response to a search area where a route is scheduled to be set, and states of charges of the batteries of the vehicles 1 having the controllers 11 which perform arithmetic operation processing and moving planning in the future of these vehicles 1. The arithmetic operation allocation decision unit 45. notifies the stopped vehicles of contents of arithmetic operation processing via the server side communication unit 41 in accordance with the decided allocation.

An example of arithmetic operation processing of the controller 11 mounted on the stopped vehicle is described.

When the vehicle side communication unit 13 receives the contents of arithmetic operation processing from the management server 40, the search area processing unit 31 of the stopped vehicle performs processing for reducing a search area (S11). In this embodiment, although a ZDD is estimated as a route search technique, other techniques may be used. The technique which uses the ZDD is a method which maps a network diagram of a moving route to a search tree. The technique which uses the ZDD can reduce a search space by performing pruning earlier by taking into account a restriction condition in a conversion process into the search tree.

Next, the traffic information acquisition unit 32 acquires traffic information in the search area from the navigation device 14 (S12). Then, the route arithmetic operation unit 33 computes a moving route of the moving vehicle in the search area (S13). An arithmetic operation result including the moving route computed by the route arithmetic operation unit 33 is transmitted to the management server 40 via the vehicle side communication unit 13. The route arithmetic operation unit 33 also records the arithmetic operation result which includes the moving route and a driving history of the stopped vehicle in the vehicle side recording unit 36 of the stopped vehicle (S14).

Again, processing of the management server 40 is described.

The optimum route decision unit 46 decides an optimum route of the moving vehicle by compiling a plurality of arithmetic operation results received from the plurality of stopped vehicles (S5). Then, the optimum route decision unit 46 transmits an optimum route to the moving vehicle via the server side communication unit 41.

The optimum route decision unit 46 records a history in which a route search is decided in the server side recording unit 47 as a moving route history. The moving route history recorded in the server side recording unit 47 is shared in common such that the moving route history can be used in processing which computes the moving route of other moving vehicle. As described above, the optimum route decision unit 46 notifies other moving vehicles of the route read from the server side recording unit 47 when the condition for deciding the route of this time is almost equal to or substantially equal to the condition when the route was decided in the past. In a case where the arithmetic operation allocation decision unit 45 determines that arithmetic operation processing cannot be applied to the moving vehicle which is moving or the moving vehicle scheduled to be moved since the number of the stopped vehicles determined in the processing in step S3 is small, route search is performed based on a moving route history recorded in the server side recording unit 47.

An example of arithmetic operation processing of the controller 11 mounted on the moving vehicle is described hereinafter.

The vehicle side communication unit 13 of the moving vehicle displays an optimum route on the display screen of the navigation device 14 by outputting the optimum route received from the management server 40 to the navigation device 14 (S21)

The vehicle side communication unit 13 outputs the optimum route to the power train instruction unit 35. The power train instruction unit 35 outputs an instruction to the power train (S22) in accordance with the optimum route. The power train is controlled in accordance with a schedule of the optimum route which the vehicle side communication unit 13 outputs.

A control of the power train means to decide, for example, an objective control valuable of a state of charge (SOC) of the battery 12, and an engine operation control and engine operation conditions (a rotational speed, a torque) of a hybrid vehicle. The power train of the moving vehicle is driven in accordance with an instruction so that the moving vehicle moves along the optimum route.

Then, the power train instruction unit 35 records a driving history of the moving vehicle in the vehicle side recording unit 36 (S23). The driving history includes at least information which contains a route where the moving vehicle moves along the optimum route, and an instruction history which the power train instruction unit 35 instructs. The driving history recorded in the vehicle side recording unit 36 is transmitted to the management server 40 via the vehicle side communication unit 13.

The server side communication unit 41 records the driving history received from the moving vehicle in the server side recording unit 47. Moving route histories and driving histories which are decided for the plurality of moving vehicles respectively are also recorded in the server side recording unit 47. For example, in allowing the stopped vehicle to compute the optimum route in the future, the optimum route which is read from the server side recording unit 47 is transmitted to the moving vehicle without allowing the stopped vehicle to perform such an arithmetic operation. In this manner, the optimum route and the history of the moving route which the moving vehicle actually moves can be shared in common.

Next, the detail of the determination process of the stopped vehicle performed in step S3 in Fig. 7 is described.

Fig. 9 is a flowchart showing an example of processing where the vehicle determination unit 44 determines the stopped vehicle. In this processing, the description is made by estimating an electric automobile as the stopped vehicle.

On a right upper side in Fig. 9, a parameter indicating a state of charge (SOC) of the battery 12 used in this processing is illustrated. The state of charge (SOC) is an index expressed by {remaining capacitance (Ah)/full charged capacitance (Ah)} x 100. When the battery 12 is fully charged, the state of charge of the battery 12 exceeds an SOC maximum value (SOCmax). The SOCmax is, for example, a value which is approximately 90% of a total capacitance of the battery 12. However, in a case where a moving start time of the vehicle 1 is getting close, even when the state of charge is less than the SOC maximum value (SOCmax), the vehicle 1 can start moving.

On the other hand, when the vehicle 1 moves, electricity discharged from the battery 12 is used and hence, the state of charge (SOC) decreases. Then, when the state of charge becomes less than an SOC minimum value (SOCmin), it is necessary to charge the battery 12. The SOC minimum value (SOCmin) is, for example, a value which is approximately 10% of the total capacitance of the battery 12. Since the SOC minimum value (SOCmin) is not zero, the vehicle 1 can travel a short distance even when the state of charge becomes less than the SOC minimum value (SOCmin).

First, the vehicle determination unit 44 determines whether or not the state of charge (SOC) of the vehicle 1 is larger than the SOC minimum value (SOCmin) (S31) . When the SOC is less than SOCmin (NO in S31), the vehicle determination unit 44 determines whether or not the vehicle 1 is being charged (S32).

When the vehicle 1 is not being charged (NO in S32), the vehicle determination unit 44 sends a charging request to the vehicle 1 (S33), and processing moves to step S4 in Fig. 7. The vehicle 1 which receives the charging request is charged with priority and hence, the controller 11 of the vehicle 1 is not used with priority.

When the vehicle 1 is being charged in step S32 (YES in S32), the controller 11 of the vehicle 1 is used with priority (S34). Since the SOC of the vehicle 1 is extremely low, it is difficult to use the vehicle 1 as a moving vehicle until the SOC is increased. However, when the vehicle 1 is being charged, the controller 11 mounted on the vehicle 1 can be used. Accordingly, the vehicle determination unit 44 determines that the controller 11 which the vehicle 1 being charged has can be used with priority over searching for a route by other vehicles 1. Processing moves to step S4 in Fig. 7 after step S34.

When the vehicle determination unit 44 determines that SOC is larger than SOCmin in step S31 (YES in S31), the vehicle determination unit 44 determines whether or not the state of charge (SOC) is larger than an SOC maximum value (SOCmax) (S35). When the SOC is less than the SOC max (NO in S35) the vehicle determination unit 44 determines whether or not the vehicle 1 is being charged (S36).

When the vehicle 1 is not being charged (NO in S36), the vehicle determination unit 44 determines whether or not the vehicle 1 is scheduled to be delivered (S37). The vehicle determination unit 44 can determine the presence or absence of the vehicle scheduled to be delivered based on whether or not an object to be delivered is positioned near the vehicle 1, the positional relationship between the vehicle 1 and another vehicle 1, a current SOC value and the power train configuration.

When the vehicle 1 is not scheduled to be delivered (NO in S37), the vehicle determination unit 44 selects the use of the controller 11 of the vehicle 1 with priority in a route search or a charging request (S38). When the vehicle determination unit 44 selects the charging request, the vehicle determination unit 44 performs an instruction: of moving the vehicle 1 to a charging area. After the vehicle 1 moves to the charging area, the vehicle determination unit 44 performs a charging request for charging the vehicle 1. After processing in step S38 is finished, processing moves to step S4 shown in Fig. 7.

When the vehicle 1 is scheduled to be delivered (YES in S37), the vehicle determination unit 44 determines whether or not the vehicle 1 can travel to an object to which luggage is delivered with a current SOC based on a distance and a route to the object to which the luggage is delivered (S39). In such processing, "the vehicle 1 can travel" means, for example, a state where the vehicle 1 can travel in a delivery area with a margin. When the vehicle 1 can travel approximately only several km, the vehicle determination unit 44 determines that the vehicle 1 cannot travel.

When the vehicle determination unit 44 determines that the SOC of the vehicle 1 is so small that the vehicle 1 cannot travel (NO in S39), the vehicle determination unit 44 makes the vehicle 1 move to a charging area (S40), or transmits a charging request to the vehicle 1 in the charging area so that the vehicle 1 is charged. This processing is a control performed by the vehicle determination unit 44 for increasing an SOC of the vehicle 1 by charging the vehicle 1.

In step S39, when the vehicle determination unit 44 determines that the vehicle 1 can travel (YES in S39), the vehicle determination unit 44 determines that the vehicle 1 is to be delivered with priority (S41). The vehicle 1 which the vehicle determination unit 44 determines as the vehicle which is to be delivered with priority is treated as a moving vehicle. After processing in step S41 is finished, processing moves to step S4 shown in Fig. 7.

Next, in step S36, processing performed when the vehicle determination unit 44 determines that the vehicle 1 is being charged (YES in S36) is described. The vehicle determination unit 44 determines whether or not the vehicle 1 is scheduled to be delivered (S42). When the vehicle 1 is not scheduled to be delivered (NO in S42), the vehicle determination unit 44 determines that the controller 11 which the vehicle 1 has can be used in a route search with priority over the controllers 11 of other vehicles 1 (S43). After processing in step S43 is finished, processing moves to step S4 in Fig. 7.

When the vehicle 1 is scheduled to be delivered (YES in S42), the vehicle determination unit 44 determines whether or not the vehicle 1 can travel with a current SOC based on a distance and the route to an object to which the vehicle 1 delivers luggage (S44) . When the vehicle determination unit 44 determines that the SOC of the vehicle 1 is small so that a traveling distance of the vehicle 1 is short whereby the vehicle 1 cannot travel (NO in S44), the vehicle determination unit 44 determines that the controller 11 which the vehicle 1 has can be used with priority over searching of a route performed by other vehicles 1 (S45). After processing in step S45 is finished, processing moves to step S4 in Fig. 7.

In step S44, when the vehicle determination unit 44 determines that the vehicle 1 can travel (YES in S44), the vehicle determination unit 44 determines that the vehicle 1 is delivered with priority (S49). After processing in step S49 is finished, processing moves to step S4 in Fig. 7.

In step S35, when the vehicle determination unit 44 determines that the SOC is larger than an SOC maximum value (SOCmax) (YES in S35), the vehicle determination unit 44 determines that the vehicle 1 is not being charged (S46).

Next, the vehicle determination unit 44 determines whether or not the vehicle 1 is scheduled to be delivered (S47) . When the vehicle 1 is not scheduled to be delivered (NO in S47), the vehicle determination unit 44 determines that the controller 11 which the vehicle 1 has can be used in a route search with priority over the controllers 11 of other vehicles 1 (S51) . After processing in step S51 is finished, processing moves to step S4 in Fig. 7.

When the vehicle 1 is scheduled to be delivered (YES in S47), the vehicle determination unit 44 determines whether or not the vehicle 1 can travel with a current SOC based on a distance and the route to an object to which the vehicle 1 delivers luggage (S48). When the vehicle determination unit 44 determines that the vehicle 1 can travel (YES in S48 or YES in S44), the vehicle determination unit 44 determines that the vehicle 1 is delivered with priority (S49). After processing in step S49 is finished, processing moves to step S4 in Fig. 7.

When the vehicle determination unit 44 determines that the vehicle 1 cannot travel (NO in step S48), the controller 11 of the vehicle 1 is used with priority (S50). That is, the controller 11 of the vehicle 1 is used in a route search of other vehicles 1. After processing in step S50 is finished, processing moves to step S4 in Fig. 7.

In accordance with the above-mentioned steps, among the plurality of vehicles 1, the stopped vehicles which include the controllers 11 can be selected. Then, by allocation processing of a route arithmetic operation which the arithmetic operation allocation decision unit 45 performs in step S4 in Fig. 7, among the selected stopped vehicles, the stopped vehicle to which a route search is assigned with priority is determined.

For example, the arithmetic operation allocation decision unit 45 selects the vehicles 1 having low possibility of being delivered in steps S34, S38, S43, S45, S50, S51 which are shown in Fig. 9 with a shade as stopped vehicles to which arithmetic operation processing is allocated. In this processing, the arithmetic operation allocation decision unit 45 takes into account at least one or more SOCs, a positional relationship between a plurality of vehicles 1 to be delivered, and areas of delivery destinations.

For example, the stopped vehicle which becomes an object to which processing in step S34 is applied has a low SOC and hence, it is difficult for the stopped vehicle to move whereby there is a high possibility that the stopped vehicle is selected with the maximum priority. On the other hand, the stopped vehicles which become . objects to which processing in steps S50 and S51 is applied have a high SOC and hence, in the next delivery of the vehicles, there is a high possibility that such stopped vehicles are selected as moving vehicles with a maximum priority. Accordingly, to prevent the stopped vehicles having a high SOC from being affected at the time of delivery of vehicles, an arithmetic operation having a low load is allocated to such stopped vehicles compared to other stopped vehicles. Further, with respect to the stopped vehicles which become objects to which the controller 11 is used with priority in steps S38, S43 and S45, the allocation of arithmetic operation processing is relatively determined based on a positional relationship, an SOC and the configuration of a power train of each stopped vehicle.

Further, in step S11, in Fig. 7, processing by the search area processing unit 31 is performed. That is, in Fig. 7, processing is performed such that the controller 11 (search area processing unit 31) of the vehicle 1 which is determined to be the stopped vehicle by the vehicle determination unit 44 of the management server 40 processes a search area.

Fig. 10 is an explanatory view showing an example of processing performed by the search area processing unit 31.

The search area processing unit (search area processing unit 31) processes a search area by a zero-suppressed binary decision diagram (ZDD) using restriction conditions set in advance. The ZDD is, for example, a technique which is described in the following non-patent literature ("a graph enumeration retrieval technique using BDD/ZDD", [online], [retrieved on May 31, 2019], Internet <http://www.orsj.or.jp/archive2/or57-11/or57_11_597.pdf>.

As shown in on a left-side in Fig. 10, estimate the case where a route search from a start point s to a finish point t is performed. With the use of the ZDD, a network diagram shown on the left side in Fig. 10 can be converted into a search tree having a tree structure shown on a right side in Fig. 10. In this case, a search space can be reduced by taking into account a restriction condition. The restriction condition is, for example, that a search is performed by writing all routes which connects the start point and the finish point and an Euler route using a stroke. By allowing the search area processing unit 31 to process a search area in this manner, a load of the controller 11 in processing which succeed the processing performed in the stopped vehicle is reduced and hence, an accurate route can be acquired with a small arithmetic operation amount.

In the moving route search system 100 according to one embodiment described heretofore, arithmetic operation processing for planning a route of a moving vehicle is allocated to the controllers 11 of stopped vehicles which the management server 40 selects. In this case, the management server 40 allocates arithmetic operation processing for searching the route of the moving vehicle to the vehicles 1 having low probability of moving immediately (stopped vehicles) with priority and makes the vehicles 1 perform a route search of the moving vehicle. Since the controllers 11 of the plurality of stopped vehicles perform arithmetic operation processing in parallel, it is unnecessary to increase an arithmetic operation load of the controller 11 of the moving vehicle. By using the controllers 11 of the stopped vehicles in the route search of the moving vehicle in this manner, an operating rate of the controllers 11 mounted on the stopped vehicles can be enhanced.

Further, the parallel arithmetic operation is performed using the controllers 11 mounted on the plurality of stopped vehicles and hence, the whole processing ability of the stopped vehicles can be increased compared to processing ability of one controller 11 or the management server 40. Accordingly, it is unnecessary to excessively increase processing ability of the controller 11 or the management server 40 and hence, an installation cost can be suppressed. As a result, a period necessary for a delivery company or a sharing company which makes used of a moving route search system to recover an installation cost can be shortened. Further, it is often the case that a driver is not in a stopped vehicle. Accordingly, the driver is not affected even when the controller 11 of the stopped vehicle is used.

Various objectives can be set as objectives for searching a route of a moving vehicle. To make a moving time shortest, a route having a shortest distance is searched; To suppress a moving cost, for example, a route which goes through a charging area where electric energy obtained by inexpensive solar power generation can be stored is searched. To suppress CO₂ emissions, a route which does not require frequent acceleration and deceleration is searched. These plurality of objectives can be combined or weighting can be performed for respective objectives and hence, a user can perform a route search for a.objective which conforms with a request of the user.

Arithmetic operation amounts of processing which the arithmetic operation allocation decision unit 45 allocates to a plurality of stopped vehicles may differ for the respective stopped vehicles. For example, in a case where a person is in a stopped vehicle, and an air conditioner is operating, an arithmetic operation amount of processing allocated to such a stopped vehicle may be suppressed.

Processing of route search according to the embodiment may be performed as batch processing before a moving vehicle departs from a start point, or may be performed by real time processing during moving of the moving vehicle. The management server 40 provide a moving vehicle with a route which suits a objective by updating an optimum moving route in response to traffic information and weather information which change every moment by real time processing.

The vehicle 1 may include only the configuration of the stopped vehicle or the configuration of the moving vehicle. For example, in the case that the vehicle has only the configuration of the stopped vehicle, the vehicle 1 includes only the vehicle side communication unit 13, the search area processing unit 31, the traffic information acquisition unit 32, the route arithmetic operation unit 33, and the vehicle side recording unit 36 shown in Fig. 4. On the other hand, in the case where the vehicle includes only the configuration of the moving vehicle, the vehicle 1 includes only the vehicle side communication unit 13, the optimum route output unit 34, the power train instruction unit 35, and the vehicle side recording unit 36 shown in Fig. 4.

Further, the vehicle side communication unit 13, the search area processing unit 31, the traffic information acquisition unit 32, the route arithmetic operation unit 33, and the vehicle side recording unit 36 which are configurational elements of the stopped vehicle may respectively include an information processing terminal such as a personal computer (PC) which is connectable to the management server 40.

Further, it is sufficient that vehicle 1 selected as the stopped vehicle be a vehicle which has the controller 11. In this case, a parallel-type hybrid automobile, a liquified natural gas automobile, a hydrogen automobile, a gasoline automobile or the like may be selected as the stopped vehicle. In the parallel-type hybrid automobile, thermal energy obtained by burning fossil fuel and electric energy are used as energy supplied to a drive source. In the liquefied natural gas automobile, thermal energy obtained by burning a liquefied natural gas is used as energy supplied to a drive source. In the hydrogen automobile, thermal energy obtained by burning hydrogen is used as energy supplied to a drive source. In the gasoline automobile, thermal energy obtained by burning gasoline is used as energy supplied to a drive source.

It is needless to say that the present invention is not limited to the above-mentioned embodiment, and various applications and modifications are conceivable without departing from the gist of the present invention described in Claims.

For example, in the above-mentioned embodiment, the configuration of the system is described in detail and specifically so as to facilitate the understanding of the present invention, and is not necessarily limited to the whole configuration described in the embodiment. Further, with respect to some parts of the configuration of the embodiment, the addition of other configurations, the deletion of the configurational elements, and the replacement of the configurational elements with other constitutional elements may be also possible.

Further, the control lines and information lines which are considered necessary for describing the present invention are indicated, and it is not always the case that all control lines and information lines which are necessary from a viewpoint as a product are indicated. It is safe to say that, in actual device and system, substantially all configurational elements are mutually connected to each other.

### List of Reference Signs

- 1:: vehicle
- 11:: controller
- 12:: battery
- 13:: vehicle side communication unit
- 17:: engine
- 21:: motor
- 31:: search area processing unit
- 32:: traffic information acquisition unit
- 33:: route arithmetic operation unit
- 36:: vehicle side recording unit
- 40:: management server
- 41:: server side communication unit
- 42:: position checking unit
- 43:: objective function decision unit
- 44:: vehicle determination unit.
- 45:: arithmetic operation allocation decision unit
- 46:: optimum route decision unit
- 60:: setting screen
- 100:: moving route search system

## Claims

1. A route planning device comprising:
a device side communication unit being connected to a plurality of vehicles on each of which a drive source, an energy storage unit capable of supplying energy to the drive source, and a controller are mounted via a network, the device side communication unit capable of performing communication with the plurality of vehicles;
a position checking unit configured to check a via point which the vehicle passes between a start point at which the vehicle starts moving and a finish point at which the vehicle finishes the moving, and a position of the vehicle;
an objective function decision unit configured to decide an objective function in conformity with an objective set in advance;
a vehicle determination unit configured to determine, based on information collected from the plurality of vehicles via the device side communication unit, whether the plurality of vehicles are respectively a moving vehicle which is moving or is scheduled to move or a stopped vehicle which is stopping; and
an arithmetic operation allocation decision unit configured to decide allocation of arithmetic operation processing for planning a route of the moving vehicle which moves by consuming energy supplied to the drive source from the energy storage unit with respect to the stopped vehicle where the objective function is computable, and allows the controller included in the stopped vehicle to perform an arithmetic operation via the device side communication unit.

2. The route planning device according to claim 1 further comprising a route decision unit configured to decide the route of the moving vehicle based on an arithmetic operation result of the arithmetic operation processing collected from the plurality of the stopped vehicles via the device side communication unit, and configured to notify the moving vehicle of the route which was decided.

3. The route planning device according to claim 2, wherein the objective function is a function which satisfies one objective selected from a plurality of objectives set in advance or a plurality of the objectives combined with each other at a predetermined rate.

4. The route planning device according to claim 3, wherein the objective includes at least one of: shortening a moving time of the moving vehicle from the start point to the finish point; reducing the energy consumed by the moving vehicle; reducing a purvey cost of the energy consumed by the moving vehicle; reducing CO₂ emissions of CO₂ emitted along with moving of the moving vehicle; and shortening the route from the start point to the finish point.

5. The route planning device according to claim 4, wherein the objective function decision unit is configured to decide the objective function based on the objective set using the objective setting screen.

6. The route planning device according to claim 2, wherein the vehicle determination unit is configured to determine the vehicle which is connected to the network and has no change for a fixed time or more as the stopped vehicle.

7. The route planning device according to claim 6, wherein the energy storage unit is a battery which is configured to store electric energy as the energy, and
the vehicle determination unit is configured to determine that, among the stopped vehicles on each of which the battery is mounted, the arithmetic operation processing is allocated with priority to the stopped vehicle which is in a state where a state of charge of the battery is a predetermined value or less and the energy is suppliable to the battery from an electricity supply device, or the stopped vehicle in which charging of the battery is completed and the stopped vehicle is not scheduled to be delivered.

8. The route planning device according to claim 7, wherein the arithmetic operation allocation decision unit is configured to decide allocation of the arithmetic operation processing based on a state of charge of the battery mounted on the stopped vehicle, a demand and supply state of the energy between the electricity supply device and the battery mounted on the stopped vehicle; an area to which the moving vehicle is delivered and includes the via point, and a vehicle delivery plan where a time zone in which the moving vehicle is delivered is defined.

9. The route planning device according to claim 7, wherein the vehicle determination unit is configured to instruct moving of the stopped vehicle to a place where the energy is suppliable to the battery from the electricity supply device with respect to the stopped vehicle which is not in a state where the energy is supplied to the battery from the electricity supply device and a delivery of the stopped vehicle is not scheduled.

10. The route planning device according to claim 2 further comprising a device side recording unit configured to record the route decided by the route decision unit, wherein
the route decision unit is configured to notify the moving vehicle of the route which is decided in the past from the device side recording unit when a condition for deciding the route of this time is almost equal to or substantially equal to a condition when the route is decided in the past.

11. The route planning device according to claim 1, wherein the energy includes at least one of thermal energy obtained by burning fossil fuel and electric energy.

12. A route planning method comprising:
processing of checking a via point which a vehicle on which a drive source, an energy storage unit capable of supplying energy to the drive source and a controller are mounted passes from a start point at which the vehicle starts moving to a finish point at which the vehicle finishes the moving, and a position of the vehicle;
processing of deciding an objective function in conformity with an objective set in advance;
processing of determining, based on information collected from a plurality of the vehicles via a device side communication unit being connected to the plurality of the vehicles via a network and capable of performing communication with the plurality of the vehicles, whether the respective vehicles are either a moving vehicle which is moving or is scheduled to move, or a stopped vehicle which is stopping; and
processing of deciding allocation of arithmetic operation processing for planning a route of the moving vehicle which moves by consuming energy supplied to the drive source from the energy storage unit with respect to the stopped vehicle where the objective function is computable, and of making the controller included in the stopped vehicle perform the arithmetic operation via the device side communication unit.

13. A route planning system comprising: a vehicle on which a drive source, an energy storage unit capable of supplying energy to the drive source, and a controller are mounted; and a route planning device, wherein
the route planning device comprises:
a device side communication unit capable of performing communication with a plurality of the vehicles connected to a network;
a position checking unit configured to check a via point which the vehicle passes between a start point at which the vehicle starts moving and a finish point at which the vehicle finishes the moving, and a position of the vehicle;
an objective function decision unit configured to decide an objective function in conformity with an objective set in advance;
a vehicle determination unit configured to determine, based on information collected from the plurality of the vehicles via the device side communication unit, whether each of the plurality of the vehicles is either a moving vehicle which is moving or is scheduled to move, or a stopped vehicle which is stopping; and
an arithmetic operation allocation decision unit configured to decide allocation of arithmetic operation processing for planning a route of the moving vehicle which moves by consuming the energy supplied to the drive source from the energy storage unit with respect to the stopped vehicle where the objective function is computable, and allows the controller included in the stopped vehicle via the device side communication unit to perform an arithmetic operation, and
the vehicle comprises:
a vehicle side communication unit capable of performing communication with the route planning device connected to the network; and
the controller configured to, in a case where the route planning device determines that the vehicle is the stopped vehicle, perform the arithmetic operation processing allocated from the route planning device via the vehicle side communication unit and transmit an arithmetic operation result to the route planning device.

14. The route planning system according to claim 13, wherein the controller mounted on the stopped vehicle comprises:
a search area processing unit configured to process a search area designated by the route planning device;
a traffic information acquisition unit configured to acquire traffic information in the search area; and
an arithmetic operation unit configured to perform the arithmetic operation processing based on the search area which is processed and the traffic information.

15. The route planning system according to claim 14, wherein the search area processing unit is configured to process the search area by a zero-suppressed binary decision diagram (ZDD) using a restriction condition set in advance.
